(19) **Europäisches Patentamt**
**European Patent Office**
**Office européen des brevets**

(11) **EP 4 663 533 A1**

(12) **EUROPEAN PATENT APPLICATION**
published in accordance with Art. 153(4) EPC

(43) Date of publication:
**17.12.2025 Bulletin 2025/51**

(21) Application number: **23921035.4**

(22) Date of filing: **07.02.2023**

(51) International Patent Classification (IPC):
**B63H 21/20** (2006.01)     **B63B 79/40** (2020.01)

(52) Cooperative Patent Classification (CPC):
**B63B 79/40; B63H 21/20**

(86) International application number:
**PCT/JP2023/003946**

(87) International publication number:
**WO 2024/166199 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Oshima Shipbuilding Co., Ltd.**
  **Saikai-shi, Nagasaki 857-2494 (JP)**
• **Mitsui O.S.K. Lines, Ltd.**
  **Tokyo 105-8688 (JP)**

(72) Inventors:
• **HIRAI, Kazuhisa**
  **Saikai-shi, Nagasaki 857-2494 (JP)**
• **OHTSU, Kosei**
  **Saikai-shi, Nagasaki 857-2494 (JP)**
• **ONISHI, Nobuyuki**
  **Tokyo 105-8688 (JP)**

(74) Representative: **V.O.**
**P.O. Box 87930**
**2508 DH Den Haag (NL)**

(54) **SHIP SPEED CONTROL SYSTEM AND SHIP EQUIPPED WITH SAID SYSTEM**

(57) The present invention provides a ship speed control system for controlling a ship that is greatly influenced by external force in such a manner that the ship speed is automatically held at a constant level, and a ship equipped with the system. To achieve this, an aspect of the present disclosure is a system (100) for controlling the traveling speed of a ship (10), comprising: a main propulsion device (11) of the ship, including an internal combustion engine (12) and a propeller (13) driven by the internal combustion engine (12); an auxiliary propulsion device (14) that supplements a propulsive force of the ship (10) by utilizing natural energy; a ship speed detection device (20) that detects a traveling speed of the ship (10); a main engine controller (30) that controls the main propulsion device (11); and a control device (40) that determines whether the traveling speed of the ship (10) falls within a predetermined range including a predefined set ship speed $V_0$ and, when the traveling speed does not fall within the predetermined range, transmits a signal to the main engine controller for changing the rotation speed N of the propeller (13) based on a calculation result based on a predetermined rotation speed of the propeller under constant ship speed control.

FIG.3

EP 4 663 533 A1

## Description

### Technical Field

The present invention relates to a ship speed control system and a ship equipped with the system.

### Background Art

A typical ship equipped with an engine as its only propulsion device changes the speed of the ship by increasing or decreasing the RPM of the engine. In such case, the ship speed changes slowly under a situation where external force, such as wind and sea conditions, have a minor influence on the ship; however, when the ship is in a situation where such external force affect the ship in a manner that causes a significant change in the ship speed, the ship crew usually responds to the situation such as by manually changing the RPM of the engine to achieve a desired ship speed, and thereby steering the ship.

Meanwhile, in a ship equipped not only with an engine but also with a device that supplements the propulsive force of the ship by utilizing wind or other natural energy (hereinafter referred to as an "auxiliary propulsion device"), the influence of external force becomes relatively large, and as a result, changes in the ship speed are also likely to be large. When external force has a large influence on the ship, it becomes necessary to adjust the RPM of the engine according to changes in the ship speed. However, in reality, manually changing the RPM of the engine at frequent intervals is a complicated process and is impractical.

Further, maintaining the traveling speed of a ship under the influence of external force within a certain range is desirable in terms of operating the ship on schedule and also from the viewpoint of achieving efficient and economical navigation, thereby reducing fuel consumption. In particular, traveling at a constant ship speed is greatly important when operating large ships, such as bulk carriers (or bulkers) that carry and transport unpackaged bulk cargo in their holds.

### Citation List

### Patent Literature

Patent Literature 1: JP2015-044588 A

### Summary of Invention

### Technical Problem

However, in practice, specific techniques for maintaining a constant speed of a ship equipped with an auxiliary propulsion device under the influence of external force are not yet provided.

Under the above-described circumstances, an object of the present invention is to provide a ship speed control system for controlling a ship that is greatly influenced by external force in such a manner whereby the ship speed is automatically held at a constant level, and to also provide a ship equipped with such system.

### Solution to Problem

An aspect of the present invention is a ship speed control system for controlling a traveling speed of a ship, the system comprising:

a main propulsion device of the ship, including an internal combustion engine and a propeller driven by the internal combustion engine;

an auxiliary propulsion device that supplements a propulsive force of the ship by utilizing natural energy;

a ship speed detection device that detects a traveling speed of the ship;

a main engine controller that controls the main propulsion device; and

a control device that determines whether the traveling speed of the ship falls within a predetermined range including a predefined set ship speed $V_0$ and, when the traveling speed does not fall within the predetermined range, transmits a signal to the main engine controller for changing a rotation speed N of the propeller based on a calculation result based on a predetermined propeller rotation speed under constant ship speed control.

According to the ship speed control system as described above, the ship speed can be automatically controlled to a constant value even in cases where natural energy fluctuates within a short time so that the auxiliary propulsive force varies significantly, and such configuration enables the ship to achieve an efficient and economical navigation, such as considering that the thrust of the main propulsion device, which is formed of an internal combustion engine, should be almost the same as the thrust obtained from the auxiliary propulsion device, and accordingly decreasing the thrust while reducing fuel consumption.

In the above-described ship speed control system, the traveling speed of the ship may be constantly detected by the ship speed detection device while control is being performed by the control device.

In the above-described ship speed control system, the traveling speed of the ship may be a speed through water or over the ground.

In the above-described ship speed control system, an average ship speed $V_X$ of the ship for a predetermined measurement time $\Delta T$ may be calculated and a determination may be made as to whether a difference $\Delta V$ between the set ship speed $V_0$ and the average ship speed $V_X$ falls within the predetermined range.

In the above-described ship speed control system, when the difference $\Delta V$ does not fall within the predetermined range, processing may be performed for increasing/decreasing the rotation speed N of the propeller.

In the above-described ship speed control system, the rotation speed N of the propeller may be increased or decreased in stages.

In the above-described ship speed control system, after the processing for increasing/decreasing the rotation speed N of the propeller is performed, the rotation speed N of the propeller may be maintained if the ship speed V of the ship reaches the set ship speed $V_0$.

In the above-described ship speed control system, after the processing for increasing/decreasing the rotation speed N of the propeller is performed, processing may be performed to change the rotation speed N of the propeller to N $\pm$ $\Delta N$ if the ship speed V of the ship does not reach the set ship speed $V_0$.

In the above-described ship speed control system, $\Delta N$ may be calculated based on a calculation formula including the ship speed difference $\Delta V$ and a value specific to the propeller as parameters.

In the above-described ship speed control system, the following expressions:

$$N = \alpha_3 V^3 + \alpha_2 V^2 + \alpha_1 V + \alpha_0 \qquad \cdots (1)$$

$$\frac{dN}{dV} = 3\alpha_3 V^2 + 2\alpha_2 V + \alpha_1 \qquad \cdots (2)$$

$$\therefore \ \Delta N = \Delta V \ \times \ \frac{dN}{dV} \qquad \cdots (3)$$

may be used as the calculation formula (wherein $\alpha_3$, $\alpha_2$ and $\alpha_1$ are values specific to the propeller).

In the above-described ship speed control system, a predetermined interval time T may be provided after the processing to change the rotation speed N of the propeller to N $\pm$ $\Delta N$ and before the next processing to change the rotation speed to N $\pm$ $\Delta N$ is performed.

In the above-described ship speed control system, after the predetermined interval time T has passed, processing may be performed again to calculate the average ship speed $V_X$ of the ship for the predetermined measurement time $\Delta T$ and to determine whether the difference $\Delta V$ between the set ship speed $V_0$ and the obtained average ship speed $V_X$ falls within the predetermined range.

The auxiliary propulsion device in the above-described ship speed control system may be a sailing device that receives wind with a sail or a kite provided on a body of the ship.

The sail or kite of the sailing device in the above-described ship speed control system may be deformable or detachable so that wind force received can be changed.

The sail in the above-described ship speed control system may be made of steel or FRP.

The above-described ship speed control system may include a first auxiliary propulsion device formed of a sailing device, and further include a second auxiliary propulsion device that obtains propulsive force through the Magnus effect.

A ship according to an aspect of the present invention is equipped with a ship speed control system as described above.

The above-described ship may be, for example, a bulk carrier.

## Advantageous Effect of Invention

The present invention can provide a ship speed control system for controlling a ship that is greatly influenced by external force in such a manner that the ship speed is automatically held at a constant level; and a ship equipped with such system.

## Brief Description of Drawings

[Figure 1] Figure 1 is a side view of a ship according to an embodiment of the present invention, showing the starboard side of the ship.

[Figure 2] Figure 2 is a top view of the ship.

[Figure 3] Figure 3 is an illustration schematically showing the configuration of a ship speed control system.

[Figure 4] Figure 4 is a flowchart showing an example of ship speed control performed by the ship speed control system.

[Figure 5] Figure 5 is a graph showing changes of ship speed, explaining an example of ship speed control performed by the ship speed control system.

## Description of Embodiments

Hereinafter, preferred embodiments of the present invention will be described with reference to the attached drawings.

A ship 10 of this embodiment is equipped with a ship speed control system 100 and configured so that it is able to travel under the control of the system. In the below description, the configuration of the ship 10 will be schematically described first, and the ship speed control system 100 for the ship 10 will be described next.

[Ship]

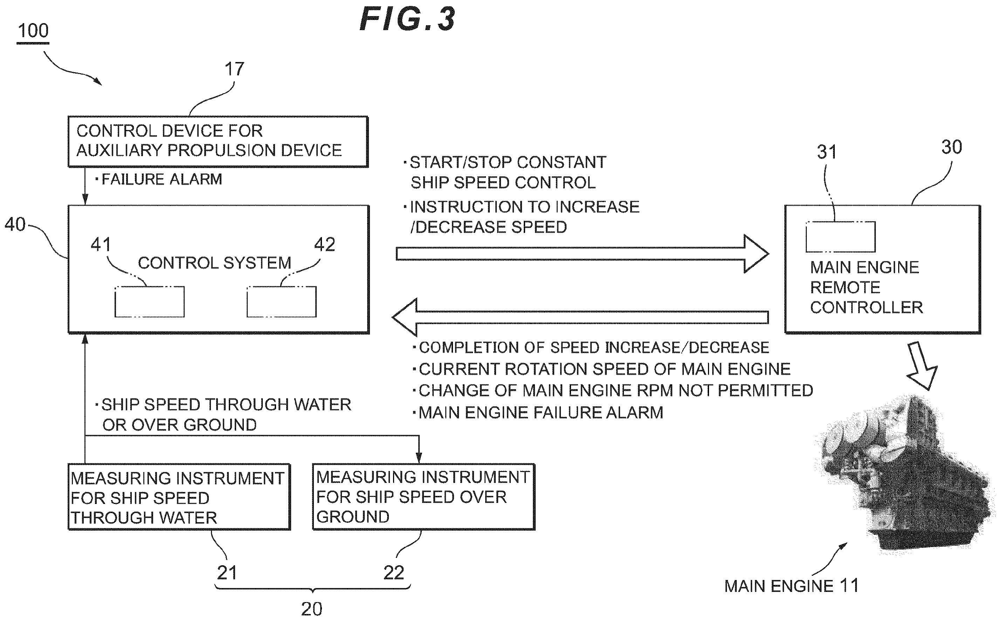

The ship 10 of this embodiment comprises, in its body, a main engine (main propulsion device) 11, as well as an auxiliary propulsion device 14 that supplements the propulsive force by utilizing wind or other natural energy, and it is further provided with a ship speed detection device 20, a main engine controller 30, a control device 40, etc. (see Figure 3, etc.). The below description explains an example in which the ship 10 is a bulk carrier; however, this is merely a suitable example of the ship 10, and the size and type of a ship 10 to which the present invention is applied are not particularly limited.

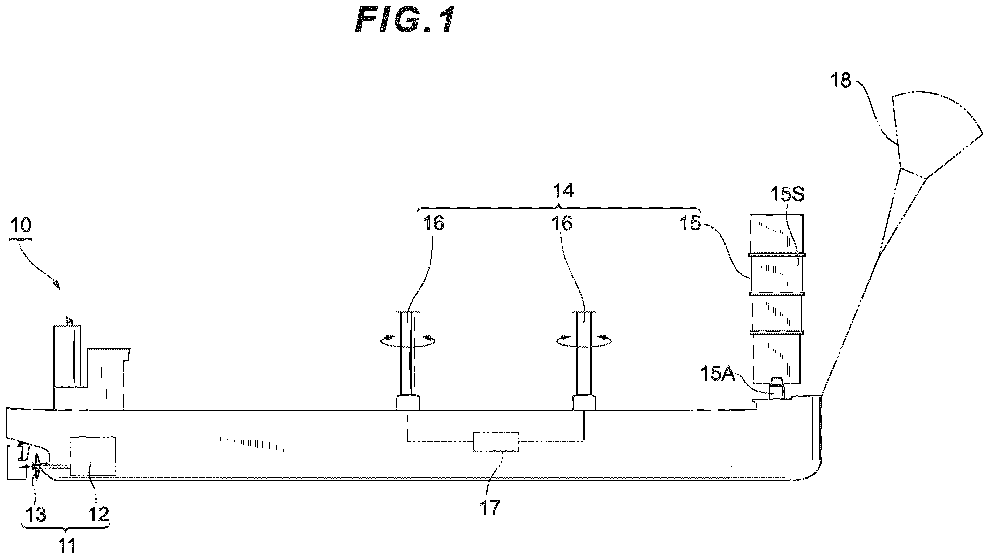

The main engine 11 serves as a main propulsion device that generates most of the propulsive force for the ship 10. In this embodiment, a device including an engine 12 and a propeller 13 is employed as the main engine 11 (see Figures 1 and 3). The engine 12 is comprised of a motor including an internal combustion engine that generates force for rotating the propeller 13. The propeller 13 rotates upon receiving a rotary driving force from the engine 12 and moves the ship 10 forward or backward (see Figure 1, etc.).

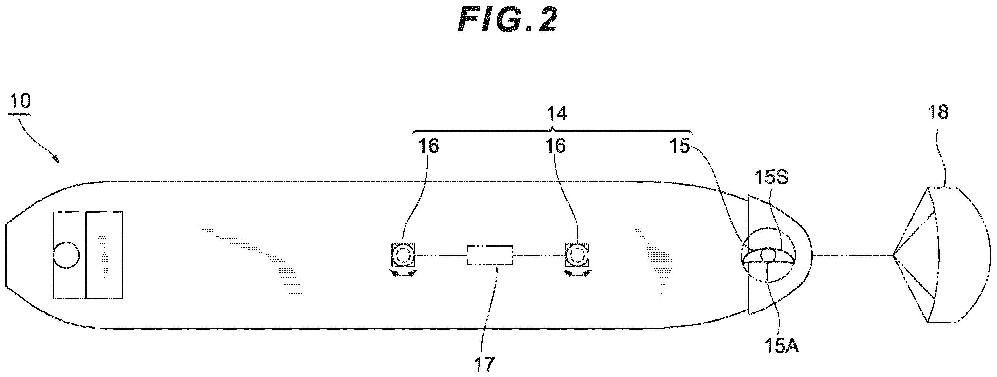

The auxiliary propulsion device 14 is a device that utilizes natural energy, such as wind, to obtain an auxiliary propulsive force and to thereby supplement the propulsive force for the ship 10. The ship 10 of this embodiment has two types of auxiliary propulsion device 14 - a sailing device 15 serving as a first auxiliary propulsion device, and a rotor sail 16 serving as a second auxiliary propulsion device (see Figures 1 and 2). It should be noted that, although devices that utilize wind are described as the auxiliary propulsion device in this embodiment, this is merely an example of embodiments utilizing natural energy. Other examples of embodiments utilizing natural energy may include a so-called air lubrication system that blows air to the bottom of the ship and retains the air there, thereby reducing resistance arising from seawater, and a so-called kite system formed of a kite 18 that receives wind and thereby provides an auxiliary propulsive force to the ship 10 (see Figures 1 and 2), although these examples are not described in detail herein.

The sailing device 15 is a device formed of a sail 15S that is mounted on the ship body, for example, at the bow part thereof, and receives wind to obtain propulsive force. The sailing device 15 employed in this embodiment has a sail 15S which is made of steel or FRP (see Figures 1 and 2); however, a sailing device 15 having a sail 15S made of other materials, for example, those made of fabric, such as cloth or canvas, may also be used, and the material and structure of the sail 15S are not particularly limited. The sail 15S in this embodiment has a substantially semi-cylindrical shape and is supported in a state wherein it can rotate about a support shaft 15A that extends vertically on the ship body, so that the sail 15S is allowed to turn (rotate) right and left and to also extend and retract up and down (see Figure 2, etc.). The sail 15S may be configured to be deformable so as to be able to change the force it receives from the wind (for example, the sail 15S may be divided into several segments so that some of the segments may be shifted up or down so as to change the overall height of the sail 15S).

The rotor sails 16 are provided, for example, at two locations on the ship body so as to serve as the second auxiliary propulsion device, and such rotor sails 16 are configured to obtain propulsive force through the Magnus effect (see Figures 1 and 2). More specifically, each of these rotor sails 16 is formed of a vertically extending cylindrical pillar and generates propulsive force through the Magnus effect when it rotates about the vertical axis. The rotor sails 16 in this embodiment are controlled by a control device 17 and operate based on signals transmitted from the control device 17, and their states and conditions are monitored by the control device 17 (see Figures 2 and 3). When the control device 17 detects an abnormal state in the rotor sail 16, it transmits a signal (FAILURE ALARM) to notify the control device 40 of such abnormality (see Figure 3).

The ship speed detection device 20 is a device for detecting the ship speed (traveling speed) of the ship 10. Examples of the devices that can be used as the ship speed detection device 20 may include: an electromagnetic log that utilizes electromagnetic induction; a Doppler sonar that determines the speed by emitting ultrasonic waves from a device located on the bottom of the ship and calculating changes in the frequency of such sound waves that return to the ship bottom; and a device that determines the speed by using radio waves from satellites. The ship speed detection device 20 used in this embodiment includes a measuring instrument for measuring ship speed through the water (log speed) so as to check fuel consumption, etc. (indicated by reference numeral 21 in Figure 3), such as a Doppler current meter and an electromagnetic current meter, and a measuring instrument for measuring ship speed over the ground (ground speed) so as to check the course, travelled distance, and speed, etc. of the ship (indicated by reference numeral 22 in Figure 3), such as a satellite speed log and GPS (see Figure 3). In this embodiment, the ship speed (traveling speed) V of the ship 10 is constantly detected by the ship speed detection device 20 while the ship speed control system 100 is being controlled by the control device 40.

The main engine controller 30 is a device that controls the main engine 11 in accordance with instruction signals received from the control device 40. This embodiment employs a main engine controller (main engine remote controller) 30 that enables remote control, so that the main engine 11 can be controlled from a distant location (see Figure 3). Although not illustrated in detail, the main engine controller 30 has a user interface 31 and is configured to allow various settings to be made, such as a control state and a control range of the RPM of the main engine 11.

The control device 40 is a device that determines whether the ship speed detected by the ship speed detection device 20 is within a predetermined range including a set ship speed $V_0$, and transmits a predetermined control signal if the detected ship speed is not within the predetermined range. The control device 40 of this embodiment is configured by a device including a storage device 41 for storing a predetermined program thereon and a computer 42 that such program causes to execute processing in accordance with a predetermined procedure, and examples of such device include an IAS (Integrated Automatic System) (see Figure 3). The control device 40 transmits signals to the main engine controller 30, such as signals to start/stop the constant ship speed control and signals to increase/decrease the ship speed V, and also receives, from the main engine controller 30, signals indicating the completion of an increase/decrease of the speed, information on the current RPM of the main engine 11, information indicating that changing the RPM of the main engine 11 is not permitted, signals indicating an abnormality of the main engine 11 (FAILURE ALARM), and the like (see Figure 3).

[Ship Speed Control System]

The ship speed control system 100 is a system that is configured to variably control the RPM of the engine 12 and the rotation speed of the propeller 13 of the main engine 11 so as to automatically control the ship 10, which is under the influence of the external force, at a constant ship speed, thereby enabling an efficient use of the thrust provided by the auxiliary propulsion device 14 and reducing fuel consumption. The ship speed control system 100 of this embodiment is configured as a system comprising the above-mentioned main engine 11, auxiliary propulsion device 14, ship speed detection device 20, main engine controller 30, and control device 40 (see Figure 3).

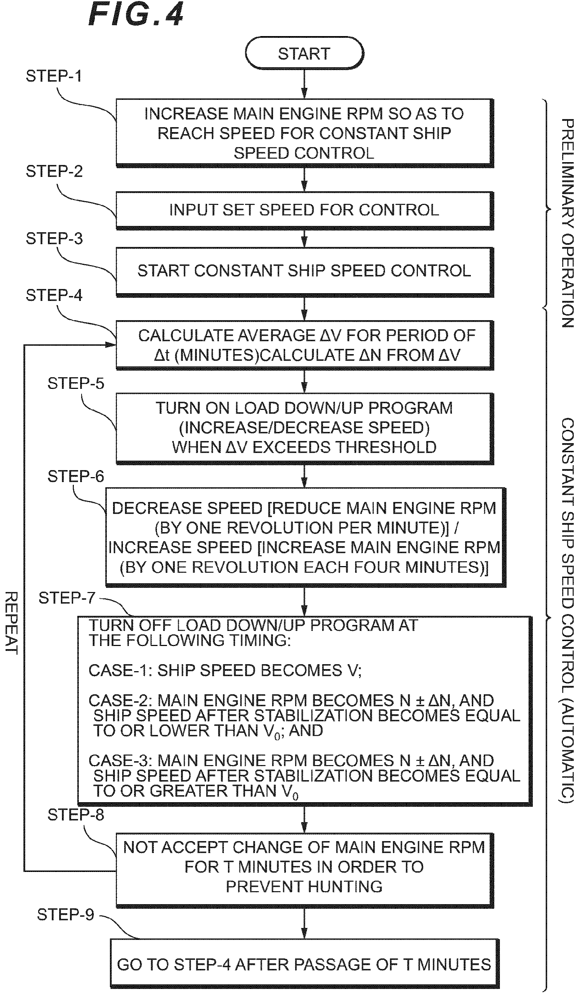

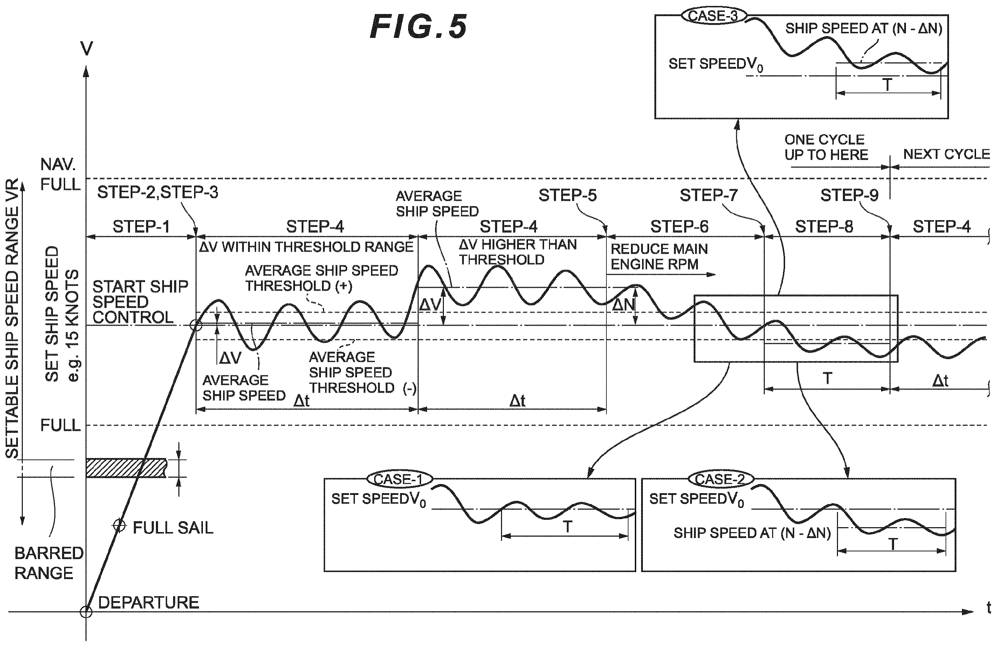

An example of the constant ship speed control performed by the ship speed control system 100 will now be described (see Figures 4 and 5).

[Preliminary Operation for Constant Ship Speed Control]

First, the RPM of the engine 12 and the rotation speed of the propeller 13 of the main engine 11 are increased so that the ship speed V reaches a given ship speed (e.g., 15 knots in the example of Figure 5) which is set within an applicable range for the constant ship speed control (such range is hereinafter referred to as a "settable ship speed range," indicated by the sign VR in Figure 5) (STEP-1). The settable ship speed range VR refers to a predetermined controllable range of ship speed V when automatically controlling, via a program, the ship speed V so as to be constant relative to a predetermined set ship speed (a set ship speed $V_0$) (see Figure 5). During this operation, the sail 15S is full sail at appropriate times.

When the RPM of the engine 12 and the rotation speed of the propeller 13 reach the relevant RPM and rotation speed, the value of the given set ship speed $V_0$ (e.g., 15 knots) is input to the control device 40 through an input device (not shown) (STEP-2), and the constant ship speed control is started (STEP-3). Either a ship speed through water (log speed) or a ship speed over the ground (ground speed) may be selected and input as the value of the set ship speed $V_0$. In Figure t, "FULL" and "NAV.FULL" each indicate an output of the main engine 11. Typically, the output of the main engine 11 varies from "STOP," which is the lowest output, to "DEAD SLOW," "SLOW," "HALF," "FULL," and "NAV.FULL," in this order, and the rotation speed of the propeller 13 and the ship speed also increase in such order. The ship normally travels at "FULL" or "NAV.FULL" output.

If $\Delta N$, which is described later (which represents the difference from the calculated optimal rotation speed derived from the ship speed difference $\Delta V$), falls within the barred range, the rotation speed may be automatically reset to a value below the barred range (see Figure 5). The barred range is set in order to avoid the risk of possible breakage of the shaft of the propeller 13 which may be caused when excessive torsional vibration stress is applied during a long-time operation at a value within such barred range.

[Constant Ship Speed Control]

The average ship speed Vx of the ship 10 for a certain length of measurement time $\Delta T$ [minutes] is calculated by the control device 40, and the difference $\Delta V$ between the set ship speed $V_0$ and the average ship speed Vx (the threshold is variable and may be set as a positive or negative difference by using the sign "+/-") is calculated (STEP-4). Further, regarding the rotation speed N of the propeller 13, a difference $\Delta N$ from a calculated optimal rotation speed is derived from the ship speed difference $\Delta V$ (STEP-4). Such difference $\Delta N$ can be calculated based on a calculation formula that includes the ship speed difference $\Delta V$ and values specific to the propeller 13 as parameters. In an example, this embodiment calculates the rotation speed difference $\Delta N$ by using each of the expressions in (1) to (3) below.

$$N = \alpha_3 V^3 + \alpha_2 V^2 + \alpha_1 V + \alpha_0 \qquad \cdot\cdot\cdot (1)$$

$$\frac{dN}{dV} = 3\alpha_3 V^2 + 2\alpha_2 V + \alpha_1 \qquad \cdot\cdot\cdot (2)$$

$$\therefore \ \Delta N = \Delta V \ \times \ \frac{dN}{dV} \qquad \cdot\cdot\cdot (3)$$

(wherein $\alpha_3$, $\alpha_2$ and $\alpha_1$ are values specific to the propeller). In this embodiment, when the ship speed changes to $V \pm \Delta V$ due to the influence of wind while the ship 10 is traveling, the rotation speed of the propeller is changed from the current rotation speed N to a new rotation speed $N \pm \Delta N$, thereby controlling the ship speed V so that it is held at the set ship speed $V_0$.

Next, whether or not the difference $\Delta V$ between the set ship speed $V_0$ and the average ship speed $V_X$ exceeds a predetermined threshold is determined. Such predetermined threshold refers to a threshold value set at an upper point relative to the set ship speed $V_0$ (indicated as "Set Ship Speed Threshold (+)" in Figure 5) and a threshold value set at a lower point relative to the set ship speed $V_0$ (indicated as "Set Ship Speed Threshold (-)" in Figure 5), and any given value can be set as such threshold.

If the difference $\Delta V$ between the set ship speed $V_0$ and the average ship speed Vx does not exceed the predetermined threshold (regarding the two areas indicated as "STEP 4" in Figure 5, see the state of the area on the left), no processing for increasing or decreasing the rotation speed N of the propeller 13 is performed. On the other hand, if the difference $\Delta V$ between the set ship speed $V_0$ and the average ship speed Vx exceeds the predetermined threshold (i.e., if the difference $\Delta V$ does not fall within the predetermined range) (regarding the two areas indicated as "STEP 4" in Figure 5, see the state of the area on the right), processing for increasing or decreasing the rotation speed N of the propeller 13 is performed (STEP-5). The increase/decrease processing may be performed by, for example, causing the computer 42 to execute a predetermined procedure for the increase/decrease processing based on a program for the increase/decrease processing that is stored on the storage device 41 of the control device 40 (for the sake of convenience, such program may also hereinafter be referred to as the "Load Down/Up program"). In an example, if the difference $\Delta V$ exceeds the upper threshold (the "Set Ship Speed Threshold (+)"), the above-described increase/decrease processing is performed so as to decrease the rotation speed N of the propeller 13 to accordingly decrease the ship speed V (see Figure 5).

When performing the increase/decrease processing as described above, the rotation speed N of the propeller 13 may be gradually increased or decreased in stages. In an example, this embodiment reduces the RPM of the engine in steps by one revolution per minute for decreasing the speed (decreasing the rotation speed), while increasing the RPM of the engine in steps by one revolution every four minutes for increasing the speed (increasing the rotation speed) (STEP-6). The graph shown in Figure 5 illustrates an example in which the rotation speed N of the propeller 13 is gradually decreased in stages to decrease the speed (see Figure 5).

After the increase/decrease processing is performed, the control device 40 determines whether or not a predetermined condition is satisfied, and if the condition is satisfied, the Load Down/Up program is turned off in order to end the increase/decrease processing and the rotation speed N of the propeller 13 is maintained (STEP-7). Various content may be set as the predetermined condition. In an example, the following three conditions (hereinafter referred to as CASE-1, CASE-2, and CASE-3, respectively) are set in this embodiment. In CASE-1, the ship speed V reaches the set ship speed $V_0$. In CASE-2, the ship speed V is equal to or lower than the set ship speed $V_0$ (in the example shown in Figure 5, the ship speed V becomes equal to or lower than the set ship speed $V_0$) (see Figures 4 and 5). In CASE-2 and CASE-3, processing is performed in order to change the rotation speed N of the propeller 13 to N $\pm$ $\Delta$N when the ship speed V has not reached the set ship speed $V_0$, and the ship speed V after the stabilization (since changes of speed are slow in ships, unlike in automobiles, etc., there is a time lag before reaching the set ship speed even when the rotation speed is changed to a predetermined value. It takes time for the rotation speed and the ship speed to stabilize after they are changed, and the state in which these speeds become stable is called "stabilization") is equal to or greater than the set ship speed $V_0$, or equal to or lower than the set ship speed $V_0$ (in the example shown in Figure 5, the ship speed V becomes equal to or lower than the set ship speed $V_0$) (see Figures 4 and 5). In an example, in this embodiment, when the ship speed V has not reached the set ship speed $V_0$, processing is performed to change the rotation speed N of the propeller 13 to N - $\Delta$N, and if the ship speed V after the stabilization is equal to or lower than the set ship speed $V_0$, such condition is considered to correspond to CASE-2, and if the ship speed V after the stabilization is equal to or greater than the set ship speed $V_0$, then the condition is considered to correspond to CASE-3. The Load Down/Up program is then turned off (see Figures 4 and 5).

When the increase/decrease processing is ended and the rotation speed N of the propeller 13 is maintained as described above (STEP-7), the system is put under the condition where no command signal for changing the rotation speed N is accepted for a predetermined time (e.g., T minutes) (STEP-8). At this time, the main engine controller 30 transmits a message to the control device 40, indicating that changing the rotation speed of the main engine 11 is not permitted (see Figure 3). Providing a predetermined interval time T in this way after the processing to change the rotation speed N of the propeller 13 to N $\pm$ $\Delta$N and before performing the next processing to change the rotation speed to N $\pm$ $\Delta$N, leads to the prevention of hunting (which refers to unstable idling or oscillations occurring during idling, meaning a phenomenon in which the speed or position unstably varies up and down around the indicated target value).

When the predetermined interval time T has passed after the completion of the increase/decrease processing, each of the steps up to this point is regarded as forming one cycle of the constant ship speed control processing, and the processing returns to STEP-4 (STEP-9) and moves on to the next processing cycle, again performing the processing to calculate the average ship speed Vx of the ship 10 for a predetermined measurement time $\Delta$T and to determine whether the difference $\Delta$V between the set ship speed $V_0$ and the average ship speed $V_X$ falls within the predetermined range (STEP-4). After that, the processing from STEP-4 to STEP-9 is repeated (see Figure 4).

According to the ship speed control system 100 as described above, the ship speed V can be automatically controlled to a constant value even in cases where natural energy fluctuates within a short time so that the auxiliary propulsive force varies significantly. This makes it possible to achieve an efficient and economical navigation of the ship, such as considering that the thrust of the main engine 11, which is formed of the (internal combustion) engine 12, should be almost the same as the thrust obtained from the auxiliary propulsion device 14 under the situation of receiving a tailwind, and accordingly decreasing the thrust while reducing fuel consumption. Furthermore, it will obviously be understood that automatically controlling the ship speed V to a constant value enables the ship to arrive at the destination as scheduled and to achieve navigation without delay, which in turn also contributes to preventing troubles that may be caused to logistics, etc.

The above-described embodiment is an example of a preferred embodiment of the present invention, but the present invention is not limited to the described embodiment and can be modified in various ways without departing from the spirit of the present invention.

## Industrial Applicability

The present invention is suited for use in a ship speed control system for controlling the traveling speed of a ship, and also in a ship equipped with such control system.

**Reference Signs List**

10 ... Ship;

11 ... Main engine (main propulsion device);

12 ... Engine (internal combustion engine);

13 ... Propeller;

14 ... Auxiliary propulsion device;

15 ... Sailing device (first auxiliary propulsion device);

15A ... Support shaft;

15S ... Sail;

16 ... Rotor sail (second auxiliary propulsion device that obtains propulsive force through the Magnus effect);

17 ... Control device for the auxiliary propulsion device;

18 ... Kite;

20 ... Ship speed detection device;

21 ... Measuring instrument for ship speed through water (log speed meter);

22 ... Measuring instrument for ship speed over ground (ground speed meter);

30 ... Main engine controller;

31 ... User interface;

40 ... Control device;

41 ... Storage device;

42 ... Computer;

100 ... Ship speed control system;

N ... Rotation speed of propeller (immediately before the start of control);

$\Delta N$ ... Difference from calculated optimal rotation speed derived from ship speed difference $\Delta V$;

t ... Time;

T ... Interval time of control (variable);

$\Delta T$ ... Measurement time for average ship speed;

$V_0$ ... Set ship speed;

V ... Ship speed;

VR ... Settable ship speed range;

$V_X$ ... Average ship speed for predetermined measurement time $\Delta T$;

$\Delta V$ ... Difference between set ship speed $V_0$ and average ship speed Vx

## Claims

1. A system for controlling a traveling speed of a ship, the system comprising:

   a main propulsion device of the ship, including an internal combustion engine and a propeller driven by the internal combustion engine;
   an auxiliary propulsion device that supplements a propulsive force of the ship by utilizing natural energy;
   a ship speed detection device that detects a traveling speed of the ship;
   a main engine controller that controls the main propulsion device; and
   a control device that determines whether the traveling speed of the ship falls within a predetermined range including a predefined set ship speed $V_0$ and, when the traveling speed does not fall within the predetermined range, transmits a signal to the main engine controller for changing a rotation speed N of the propeller based on a calculation result based on a predetermined propeller rotation speed under constant ship speed control.

2. The ship speed control system according to claim 1, wherein the traveling speed of the ship is constantly detected by the ship speed detection device while control is being performed by the control device.

3. The ship speed control system according to claim 2, wherein the traveling speed of the ship is a speed through water or over the ground.

4. The ship speed control system according to claim 3, wherein an average ship speed $V_X$ of the ship for a predetermined measurement time $\Delta T$ is calculated and a determination is made as to whether a difference $\Delta V$ between the set ship speed $V_0$ and the average ship speed $V_X$ falls within the predetermined range.

5. The ship speed control system according to claim 4, wherein, when the difference $\Delta V$ does not fall within the predetermined range, processing for increasing/decreasing the rotation speed N of the propeller is performed.

6. The ship speed control system according to claim 5, wherein the rotation speed N of the propeller is increased or decreased in stages.

7. The ship speed control system according to claim 6, wherein, after the processing for increasing/decreasing the rotation speed N of the propeller is performed, the rotation speed N of the propeller is maintained if a ship speed V of the ship reaches the set ship speed $V_0$.

8. The ship speed control system according to claim 6, wherein, after the processing for increasing/decreasing the rotation speed N of the propeller is performed, processing is performed to change the rotation speed N of the propeller to N $\pm$ $\Delta$N if a ship speed V of the ship does not reach the set ship speed $V_0$.

9. The ship speed control system according to claim 8, wherein the $\Delta$N is calculated based on a calculation formula including the ship speed difference $\Delta V$ and a value specific to the propeller as parameters.

10. The ship speed control system according to claim 9, wherein the following expressions:

$$\text{N} = \alpha_3 V^3 + \alpha_2 V^2 + \alpha_1 V + \alpha_0 \qquad \cdot\cdot\cdot (1)$$

$$\frac{dN}{dV} = 3\alpha_3 V^2 + 2\alpha_2 V + \alpha_1 \qquad \cdot\cdot\cdot (2)$$

$$\therefore \ \Delta N = \Delta V \ \times \ \frac{dN}{dV} \qquad\qquad \cdot \ \cdot \ \cdot (3)$$

are used as the calculation formula (wherein $\alpha_3$, $\alpha_2$ and $\alpha_1$ are values specific to the propeller).

11. The ship speed control system according to claim 10, wherein a predetermined interval time T is provided after the processing to change the rotation speed N of the propeller to N $\pm$ $\Delta$N and before the processing to change the rotation speed to N $\pm$ $\Delta$N is performed next.

12. The ship speed control system according to claim 11, wherein, after the predetermined interval time T has passed, processing to calculate the average ship speed $V_X$ of the ship for the predetermined measurement time $\Delta$T and to determine whether the difference $\Delta$V between the set ship speed $V_0$ and the obtained average ship speed Vx falls within the predetermined range is performed again.

13. The ship speed control system according to claim 12, wherein the auxiliary propulsion device is a sailing device that receives wind with a sail or a kite provided on a body of the ship.

14. The ship speed control system according to claim 13, wherein the sail or kite of the sailing device is deformable or detachable so that wind force received can be changed.

15. The ship speed control system according to claim 14, wherein the sail is made of steel or FRP.

16. The ship speed control system according to claim 15, in addition to the auxiliary propulsion device that is a first auxiliary propulsion device formed of the sailing device, also comprising a second auxiliary propulsion device that obtains propulsive force through the Magnus effect.

17. A ship equipped with a ship speed control system according to any one of claims 1-16.

18. The ship according to claim 17, which is a bulk carrier.

# FIG.1

# FIG.2

# FIG.3

100

17 — CONTROL DEVICE FOR AUXILIARY PROPULSION DEVICE

30 — MAIN ENGINE REMOTE CONTROLLER
31

40 — CONTROL SYSTEM
41
42

20
21 — MEASURING INSTRUMENT FOR SHIP SPEED THROUGH WATER
22 — MEASURING INSTRUMENT FOR SHIP SPEED OVER GROUND

MAIN ENGINE 11

·FAILURE ALARM

·START/STOP CONSTANT SHIP SPEED CONTROL
·INSTRUCTION TO INCREASE/DECREASE SPEED

·COMPLETION OF SPEED INCREASE/DECREASE
·CURRENT ROTATION SPEED OF MAIN ENGINE
·CHANGE OF MAIN ENGINE RPM NOT PERMITTED
·MAIN ENGINE FAILURE ALARM

·SHIP SPEED THROUGH WATER OR OVER GROUND

# FIG.4

START

STEP-1 — INCREASE MAIN ENGINE RPM SO AS TO REACH SPEED FOR CONSTANT SHIP SPEED CONTROL

STEP-2 — INPUT SET SPEED FOR CONTROL

STEP-3 — START CONSTANT SHIP SPEED CONTROL

PRELIMINARY OPERATION

STEP-4 — CALCULATE AVERAGE $\Delta V$ FOR PERIOD OF $\Delta t$ (MINUTES)CALCULATE $\Delta N$ FROM $\Delta V$

STEP-5 — TURN ON LOAD DOWN/UP PROGRAM (INCREASE/DECREASE SPEED) WHEN $\Delta V$ EXCEEDS THRESHOLD

STEP-6 — DECREASE SPEED [REDUCE MAIN ENGINE RPM (BY ONE REVOLUTION PER MINUTE)] / INCREASE SPEED [INCREASE MAIN ENGINE RPM (BY ONE REVOLUTION EACH FOUR MINUTES)]

REPEAT

STEP-7 — TURN OFF LOAD DOWN/UP PROGRAM AT THE FOLLOWING TIMING:

CASE-1: SHIP SPEED BECOMES V;

CASE-2: MAIN ENGINE RPM BECOMES $N \pm \Delta N$, AND SHIP SPEED AFTER STABILIZATION BECOMES EQUAL TO OR LOWER THAN $V_0$; AND

CASE-3: MAIN ENGINE RPM BECOMES $N \pm \Delta N$, AND SHIP SPEED AFTER STABILIZATION BECOMES EQUAL TO OR GREATER THAN $V_0$

STEP-8 — NOT ACCEPT CHANGE OF MAIN ENGINE RPM FOR T MINUTES IN ORDER TO PREVENT HUNTING

STEP-9 — GO TO STEP-4 AFTER PASSAGE OF T MINUTES

CONSTANT SHIP SPEED CONTROL (AUTOMATIC)

# FIG.5

CASE-3  SHIP SPEED AT (N - ΔN)

SET SPEED $V_0$

T

ONE CYCLE UP TO HERE    NEXT CYCLE

NAV. FULL

STEP-2, STEP-3

STEP-1    STEP-4    AVERAGE SHIP SPEED    STEP-5    STEP-7    STEP-9

ΔV WITHIN THRESHOLD RANGE    STEP-4    STEP-6    STEP-8    STEP-4

ΔV HIGHER THAN THRESHOLD    REDUCE MAIN ENGINE RPM

AVERAGE SHIP SPEED THRESHOLD (+)

START SHIP SPEED CONTROL

SET SHIP SPEED e.g. 15 KNOTS

ΔV

ΔN

ΔV

AVERAGE SHIP SPEED    AVERAGE SHIP SPEED THRESHOLD (-)    Δt

SETTABLE SHIP SPEED RANGE VR

Δt    Δt

T    Δt

FULL

FULL SAIL

CASE-1

SET SPEED $V_0$

T

CASE-2

SET SPEED $V_0$

SHIP SPEED AT (N - ΔN)

T

BARRED RANGE

DEPARTURE

t

V

EP 4 663 533 A1

## INTERNATIONAL SEARCH REPORT

International application No.

**PCT/JP2023/003946**

| A. | CLASSIFICATION OF SUBJECT MATTER |
|---|---|

*B63H 21/20*(2006.01)i; *B63B 79/40*(2020.01)i
FI:　B63H21/20; B63B79/40

According to International Patent Classification (IPC) or to both national classification and IPC

| B. | FIELDS SEARCHED |
|---|---|

Minimum documentation searched (classification system followed by classification symbols)

B63H21/20; B63H25/04; B63B49/00; B63B79/40; F02D29/02; G05D1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 217575571 U (TIANJIN CNOOC ENERGY DEVELOPMENT OILFIELD FACILITIES MANAGEMENT CO., LTD.) 14 October 2022 (2022-10-14) paragraphs [0034]-[0059], fig. 1, 2 | 1-8, 17-18 |
| A | | 9-16 |
| Y | JP 58-185394 A (NIIGATA ENG. CO., LTD.) 29 October 1983 (1983-10-29) p. 1, lower left column, line 16 to p. 2, lower left column, line 17, fig. 1, 2 | 1-8, 17-18 |
| A | | 9-16 |
| Y | JP 2011-121446 A (MITSUI ENGINEERING & SHIPBUILDING CO., LTD.) 23 June 2011 (2011-06-23) paragraph [0034] | 1-8, 17-18 |
| A | | 9-16 |
| A | JP 57-55290 A (THE HANSHIN DIESEL WORKS, LTD.) 02 April 1982 (1982-04-02) | 1-18 |
| A | JP 59-216788 A (NKK CORP.) 06 December 1984 (1984-12-06) | 1-18 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/003946** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2013-14326 A (MITSUBISHI HEAVY INDUSTRIES, LTD.) 24 January 2013 (2013-01-24) | 1-18 |

Form PCT/ISA/210 (second sheet) (January 2015)

INTERNATIONAL SEARCH REPORT
Information on patent family members

International application No.

**PCT/JP2023/003946**

| Patent document cited in search report | | | Publication date (day/month/year) | Patent family member(s) | | | Publication date (day/month/year) |
|---|---|---|---|---|---|---|---|
| CN | 217575571 | U | 14 October 2022 | (Family: none) | | | |
| JP | 58-185394 | A | 29 October 1983 | (Family: none) | | | |
| JP | 2011-121446 | A | 23 June 2011 | (Family: none) | | | |
| JP | 57-55290 | A | 02 April 1982 | (Family: none) | | | |
| JP | 59-216788 | A | 06 December 1984 | (Family: none) | | | |
| JP | 2013-14326 | A | 24 January 2013 | US | 2011/0257820 | A1 | |
| | | | | EP | 2371703 | A1 | |
| | | | | CN | 102256869 | A | |
| | | | | KR | 10-2011-0089202 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015044588 A